# EUROPÄISCHE PATENTSCHRIFT

(11) **EP 2 214 522 B1**
(45) Veröffentlichungstag und Bekanntmachung des Hinweises auf die Patenterteilung: **16.05.2012**
(21) Anmeldenummer: 07818154.2
(22) Anmeldetag: 14.09.2007
(51) Int. Cl.: A23L 3/36, A23L 3/375

(54) **VORRICHTUNG ZUM KÜHLEN UND/ODER FROSTEN VON STOFFEN**
DEVICE FOR REFRIGERATING AND/OR FREEZING SUBSTANCES
DISPOSITIF DE RÉFRIGÉRATION OU DE CONGÉLATION DE MATIÈRES

(30) Priorität: 22.09.2006 DE 102006045266
(43) Veröffentlichungstag der Anmeldung: 11.08.2010
(73) Patentinhaber: Linde AG, 80331 München (DE)
(72) Erfinder: BERGHOFF, Rudolf, 59590 Geseke (DE)
(86) Internationale Anmeldenummer: PCT/EP2007/008001
(87) Internationale Veröffentlichungsnummer: WO 2008/034558

(56) Entgegenhaltungen:
- EP-A- 0 874 204
- GB-A- 1 139 701
- US-A- 5 408 921

## Beschreibung

Die Erfindung betrifft eine Vorrichtung zum Kühlen und/oder Frosten von Ausgangsstoffen, insbesondere von Lebensmitteln, mit zwei von einer Einhausung umgebenen, unmittelbar aneinander grenzenden Behandlungszonen, wobei in mindestens einer der Behandlungszonen den Ausgangsstoffen in direktem oder indirektem Kontakt mit tiefkaltem flüssigem Gas Wärme entziehbar ist, während die zweite Behandlungszone ein Transportband zum Befördern der Ausgangsstoffe durch die zweite Behandlungszone aufweist.

Kühlen und/oder Frosten von Lebensmitteln mit tiefkalten flüssigen Gasen findet u.a. in Linearfrostern statt. Im klassischen Linearfroster wird das flüssige Gas mittels Düsen oder Sprührohren auf die zu kühlenden oder zu frostenden Lebensmittel aufgesprüht (vgl. zum Biespiel 6B-A-1139701 und EP-A-0874204). Das flüssige Gas verdampft hierbei und wird als Kaltgas mittels Ventilatoren weiter durch den Linearfroster geleitet, wobei es den Lebensmitteln auf konvektivem Wege Wärme entzieht und sich dabei erwärmt. Das erwärmte Gas wird schließlich einer Gasabsaugung zugeführt und in die Umgebung geleitet.

Für spezielle Anwendungen erfolgt die Kühlung bzw. Frostung der Lebensmittel nicht durch Besprühen, sondern durch Eintauchen direkt in das tiefkalte flüssige Gas. Die Geräte zur Durchführung derartiger Anwendungen, im Folgenden als Prozessfroster bezeichnet, enthalten z.B. Tauchbäder, Rüttelrinnen, saugfähige Transportbänder oder Plattenbänder, in oder auf denen die Kältebehandlung der Lebensmittel stattfindet. Das bei einer derartigen Anwendung durch Verdampfen von flüssigem Gas entstehende Kaltgas, gelangt entweder als Abgas direkt in die Absaugung oder es wird durch Überleitrohre in einen nachfolgenden Froster geführt, wo es zur Kühlung verwendet wird. Stand der Technik ist es aber auch, dass im Prozessfroster entstehende Kaltgas mit einem Förderventilator aus dem Prozessfroster abzuziehen und in einen sich direkt anschließenden zweiten Froster zu fördern. Um eine derartige Einrichtung handelt es sich beispielsweise bei der von der Fa. CES angebotene Kombination aus einem Tauchbad (Prozessfroster) und einem Drehrohrfroster, bei dem das im Tauchbad entstehende Kaltgas mit einem Förderventilator vom Tauchbad in den sich unmittelbar anschließenden Drehrohrfroster gefördert wird.

Die oben beschriebenen Einrichtungen weisen jedoch einige gravierende Nachteile auf. So sind Förderventilatoren und Überleitungsrohre, die zur Vereisung und Verschmutzung neigen, nur schwer zu reinigen und Stellen daher aus hygienischer Sicht ein Problem dar. Darüber hinaus verursachen Überleitungsrohre einen Druckverlust, der mit einer höheren Ventilatorleistung ausgeglichen werden muss, und führen darüber hinaus zu Kälteverlusten.

Aufgabe der vorliegenden Erfindung ist es daher, eine Vorrichtung der eingangs genannten Art anzugeben, durch welche die Nachteile des Standes der Technik überwunden werden können.

Diese Aufgabe wird erfindungsgemäß dadurch gelöst, dass sie eine Gasabsaugeinrichtung umfasst, durch die innerhalb der Einhausung ein Druckgefälle erzeugbar ist, aufgrund dessen durch Verdampfen von tiefkaltem flüssigem Gas in der ersten Behandlungszone entstehendes Kaltgas aus der ersten Behandlungszone abfließt und anschließend durch die zweite Behandlungszone hindurch strömt und dort ebenfalls zur Produktkühlung beiträgt.

Die Erfindung ist wie in Auspruch 1 definiert.

Bei dem der Gasabsaugeinrichtung zuströmenden Gas handelt es sich um warmes Gas, das nicht zu einer Vereisung der Gasabsaugeinrichtung führt. Zweckmäßiger Weise ist die Gasabsaugeinrichtung außerhalb der die Behandlungszonen umgebenden Einhausung angeordnet, wodurch sie leicht zugänglich und mit geringem Aufwand von Verschmutzungen zu reinigen ist.

Weitere Ausgestaltungen der erfindungsgemäßen Vorrichtung sehen vor, dass
- die zu kühlenden und/oder zu frostenden Ausgangsstoffe im Gegenstrom zu dem aus der ersten Behandlungszone abfließenden Kaltgas durch die zweite Behandlungszone transportierbar sind.
- die zu kühlenden und/oder zu frostenden Ausgangsstoffe im Gleichstrom zu dem aus der ersten Behandlungszone abfließenden Kaltgas durch die zweite Behandlungszone transportierbar sind.
- mit dem Transportband zum Befördern der Ausgangsstoffe durch die zweite Behandlungszone die Ausgangsstoffe ganz oder teilweise durch die erste Behandlungszone transportierbar sind.
- die zweite Behandlungszone Ventilatoren zur Unterstützung der Gasströmung innerhalb der zweiten Behandlungszone aufweist.
- die zweite Behandlungszone mit zumindest einer Einrichtung zum Versprühen von tiefkaltem flüssigem Gas auf die Oberflächen von Ausgangsstoffen aufweist.
- die erste Behandlungszone ein Tauchbad aufweist, in dem den Ausgangsstoffen durch Eintauchen in tiefkaltes flüssiges Gas Wärme entziehbar ist.
- die erste Behandlungszone ein in ein tiefkaltes flüssiges Gas eintauchendes Platten- oder Lamellenband aufweist, auf dem liegend die Ausgangsstoffe durch die erste Behandlungszone transportierbar sind.
- die erste Behandlungszone ein saugfähiges, mit tiefkaltem flüssigem Gas tränkbares Transportband aufweist, auf dem liegend die Ausgangsstoffe durch die erste Behandlungszone transportierbar sind.
- die erste Behandlungszone eine Einrichtung zum Erzeugen eines Stromes aus tiefkaltem flüssigem Gas aufweist, in den die Ausgangsstoffe einbringbar und mit dem die Ausgangsstoffe durch die erste Behandlungszone transportierbar sind.

Die erfindungsgemäße Vorrichtung erlaubt es, das Kühlen und/oder Frosten von Ausgangsstoffen, insbesondere von Lebensmitteln, im Vergleich zum Stand der Technik effizienter durchzuführen, da die in dem als Kühlmittel eingesetzten tiefkalten flüssigen Gas enthaltene Kälte besser genutzt und der Aufwand für notwendige Reinigungsarbeiten erheblich verringert wird.

## Patentansprüche

1. Vorrichtung zum Kühlen und/oder Frosten von Ausgangsstoffen, insbesondere von Lebensmittel, mit zwei von einer Einhausung umgebenen, unmittelbar aneinander grenzenden Beharidlungszonen, wobei in mindestens einer der Behandlungszonen den Ausgangsstoffen in direktem oder indirektem Kontakt mit tiefkaltem flüssigem Gas Wärme entziehbar ist, während die zweite Behandlungszone ein Transportband zum Befördern der Ausgangsstoffe durch die zweite Behandlungszone aufweist, und eine Gasabsaugeinrichtung vorgesehen ist, durch die innerhalb der Einhausung ein Druckgefälle erzeugbar ist, aufgrund dessen durch Verdampfen von tiefkaltem flüssigem Gas in der ersten Behandlungszone entstehendes Kaltgas aus der ersten Behandlungszone abfließt und anschließend durch die zweite Behandlungszone hindurch strömt, dadurch gekenntzeichnet, dass die erste Behandlungszone ein Tauchbad aufweist und somit als Prozessfroster ausgebildet ist, in dem den Ausgangsstoffen durch Eintauchen in tiefkaltes flüssiges Gas Wärme entziehbar ist und die zu kühlenden und/oder zu frostenden Ausgangsstoffe im Gegenstrom oder im Gleichstrom zu dem aus der ersten Behandlungszone abfließenden Kaltgas durch die zweite Behandlungszone transportierbar sind, wobei die Gasabsaugeinrichtung außerhalb der die Behandlungszonen umgebenden Einhausung angeordnet ist.

2. Vorrichtung nach Anspruch 1, **dadurch gekennzeichnet, dass** mit dem Transportband zum Befördern der Ausgangsstoffe durch die zweite Behandlungszone die Ausgangsstoffe ganz oder teilweise durch die erste Behandlungszone transportierbar sind.

3. Vorrichtung nach Anspruch 1 oder 2, **dadurch gekennzeichnet, dass** die zweite Behandlungszone Ventilatoren zur Unterstützung der Gasströmung innerhalb der zweiten Behandlungszone aufweist.

4. Vorrichtung nach einem der Ansprüche 1 bis 3, **dadurch gekennzeichnet, dass** die zweite Behandlungszone mit zumindest einer Einrichtung zum Versprühen von tiefkaltem flüssigem Gas auf die Oberfläche von Ausgangsstoffen aufweist.

5. Vorrichtung nach einem der Ansprüche 1 bis 4, **dadurch gekennzeichnet, dass** die erste Behandlungszone ein in ein tiefkaltes Gas eintauchendes Platten- oder Lamellenband aufweist, auf dem liegend die Ausgangsstoffe durch die erste Behandlungszone transportierbar sind.

6. Vorrichtung nach einem der Ansprüche 1 bis 5, **dadurch gekennzeichnet, dass** die erste Behandlungszone ein saugfähiges, mit tiefkaltem flüssigem Gas tränkbares Transportband aufweist, auf dem liegend die Ausgangsstoffe durch die erste Behandlungszone transportierbar sind.

7. Vorrichtung nach einem der Ansprüche 1 bis 6, **dadurch gekennzeichnet, dass** die erste Behandlungszone eine Einrichtung zum Erzeugen eines Stromes aus tiefkaltem flüssigem Gas aufweist, in den die Ausgangsstoffe einbringbar und mit dem die Ausgangsstoffe durch die erste Behandlungszone transportierbar sind.

## Claims

1. Apparatus for the refrigeration and/or freezing of starting materials, in particular of foodstuffs, with two treatment zones surrounded by a housing and directly contiguous to one another, in at least one of the treatment zones, heat being extractable from the starting materials in direct or indirect contact with low-temperature liquid gas, while the second treatment zone has a conveyor belt for conveying the starting materials through the second treatment zone, and a gas suckaway device is provided, by means of which, inside the housing, a pressure drop can be generated, on account of which cold gas occurring as a result of the evaporation of low-temperature liquid gas in the first treatment zone flows out of the first treatment zone and subsequently flows through the second treatment zone, **characterized in that** the first treatment zone has an immersion bath and is therefore designed as a process freezer, in which heat can be extracted from the starting materials by immersion in low-temperature liquid gas, and the starting materials to be refrigerated and/or to be frozen can be transported through the second treatment zone in countercurrent or in concurrent to the cold gas flowing out of the first treatment zone, the gas suckaway device being arranged outside the housing surrounding the treatment zones.

2. Apparatus according to Claim 1, **characterized in that** the starting materials can be transported completely or partially through the first treatment zone by means of the conveyor belt for conveying the starting materials through the second treatment zone.

3. Apparatus according to Claim 1 or 2, **characterized in that** the second treatment zone has fans for assisting the gas flow inside the second treatment zone.

4. Apparatus according to one of Claims 1 to 3, **characterized in that** the second treatment zone is provided with at least one device for spraying low-temperature liquid gas onto the surface of starting materials.

5. Apparatus according to one of Claims 1 to 4, **characterized in that** the first treatment zone has a plate or slat conveyor which dips into a low-temperature gas and lying on which the starting materials can be transported through the first treatment zone.

6. Apparatus according to one of Claims 1 to 5, **characterized in that** the first treatment zone has an absorbent conveyor belt which can be saturated with low-temperature liquid gas and lying on which the starting materials can be transported through the first treatment zone.

7. Apparatus according to one of Claims 1 to 6, **characterized in that** the first treatment zone has a device for generating a stream of low-temperature liquid gas, into which the starting materials can be introduced and by means of which the starting materials can be transported through the first treatment zone.

## Revendications

1. Dispositif pour refroidir et/ou congeler des substances de départ, en particulier des aliments, le dispositif étant doté de deux zones de traitement entourées par un caisson et immédiatement adjacentes l'une à l'autre,
de la chaleur pouvant être extraite des substances de départ dans au moins l'une des zones de traitement, par contact direct ou indirect avec un gaz liquéfié par refroidissement,
la deuxième zone de traitement présentant une bande transporteuse qui transporte les substances de départ à travers la deuxième zone de traitement,
un dispositif d'aspiration de gaz qui permet de créer à l'intérieur du caisson une diminution de pression grâce à laquelle le gaz froid produit dans la première zone de traitement par vaporisation du gaz liquéfié par refroidissement s'écoule hors de la première zone de traitement et traverse ensuite la deuxième zone de traitement étant prévu,
**caractérisé en ce que**
la première zone de traitement présente un bain d'immersion et est ainsi configurée comme congélateur de processus dans lequel de la chaleur peut être extraite des substances de départ en les immergeant dans le gaz liquéfié par refroidissement et
**en ce que** les substances de départ à refroidir et/ou à congeler peuvent être transportées à travers la deuxième zone de traitement à contre-courant ou à courant parallèle par rapport au gaz froid qui s'écoule hors de la première zone de traitement,
le dispositif d'aspiration de gaz étant disposé à l'extérieur du caisson qui entoure les zones de traitement.

2. Dispositif selon la revendication 1, **caractérisé en ce que** la bande transporteuse qui transporte les substances de départ à travers la deuxième zone de traitement permet de transporter la totalité ou une partie des substances de départ à travers la première zone de traitement.

3. Dispositif selon les revendications 1 ou 2, **caractérisé en ce que** la deuxième zone de traitement présente des ventilateurs qui soutiennent l'écoulement de gaz dans la deuxième zone de traitement.

4. Dispositif selon l'une des revendications 1 à 3, **caractérisé en ce que** la deuxième zone de traitement présente au moins un dispositif qui projette du gaz liquéfié par refroidissement sur la surface des substances de départ.

5. Dispositif selon l'une des revendications 1 à 4, **caractérisé en ce que** la première zone de traitement présente une bande à plaques ou à lamelles qui plonge dans le gaz refroidi et sur laquelle les substances de départ peuvent être transportés à travers la première zone de traitement.

6. Dispositif selon l'une des revendications 1 à 5, **caractérisé en ce que** la première zone de traitement présente une bande transporteuse perméable à l'aspiration, apte à être imprégnée de gaz liquéfié par refroidissement et sur laquelle les substances de départ peuvent être transportées à travers la première zone de traitement.

7. Dispositif selon l'une des revendications 1 à 6, **caractérisé en ce que** la première zone de traitement présente un dispositif qui permet de former un écoulement de gaz liquéfié par refroidissement dans lequel les substances de départ peuvent être placées et de transporter les substances de départ à travers la première zone de traitement.
